# EUROPÄISCHE PATENTSCHRIFT

(11) **EP 3 404 273 B1**
(45) Veröffentlichungstag und Bekanntmachung des Hinweises auf die Patenterteilung: **15.01.2020**
(21) Anmeldenummer: 17170965.2
(22) Anmeldetag: 15.05.2017
(51) Int. Cl.: F16B 25/00, F16B 25/10

(54) **SCHRAUBELEMENT**
SCREW ELEMENT
ÉLÉMENT À VISSER

(43) Veröffentlichungstag der Anmeldung: 21.11.2018
(73) Patentinhaber: SPAX International GmbH & Co. KG, 58256 Ennepetal (DE)
(72) Erfinder: Langewiesche, Frank, 45549 Sprockhövel (DE)
(74) Vertreter: Schweiger, Johannes

(56) Entgegenhaltungen:
- EP-A1- 2 806 174
- DE-U1-202010 010 250
- JP-A- H10 131 931

## Beschreibung

Die vorliegende Erfindung betrifft ein Schraubelement umfassend einen Gewindeschaft und eine an einem Schaftende ausgebildete Schraubenspitze und einen am gegenüberliegenden Schaftende ausgebildeten Schraubenkopf mit einem Kraftangriff und mit einem auf dem Gewindeschaft und der Schraubenspitze verlaufenden Schraubgewinde, wobei die Schraubenspitze einen in Einschraubrichtung gesehen vorderen, sich zum Schraubelementende hin verjüngenden Spitzenabschnitt und einen am Gewindeschaft ausgebildeten Abschnitt mit einem im Querschnitt gesehen polygonalen Querschnitt aufweist, dessen Hüllkreisdurchmesser größer ist als ein Kerndurchmesser der Schraubenspitze sowie der polygonale Querschnitt einen auf dem Hüilkreis des Abschnitts liegenden Eckpunkt aufweist, in dem eine in Bezug auf eine Längsmittelachse im Sinne einer Durchmesservergrößerung radial gerichtete Stirnkantenfläche endet.

Aus der EP 2 806 174 ist ein derartiges Schraubelement bekannt. Der bei diesem Schraubelement vorhandene polygone Abschnitt mit seinen endseitigen Stirnkantenflächen bedingt ein sich vergrößerndes Einschraubmoment bei harten Werkstoffen, z. B. Hartholz, wobei ein Durchdrehen der Schraube nicht auszuschließen ist.

Die DE 20 2010 010250 U1 offenbart ein bohrendes Befestigungselement, das einen Kopf (30), einen Schaft (31), der mit dem Kopf (30) verbunden ist, und ein Gewinde (32) an dem Schaft (31) umfaßt, wobei zwischen dem Kopf (30) und dem Schaft (31) eine Verbindungsfläche (300) vorgesehen ist, wobei der Schaft (31) an der Umfangsseite mindestens zwei Umfangsflächen (310) aufweist, wobei zwei benachbarte Umfangsflächen (310) an der Verbindungsstelle eine Ecke (311) bilden, dadurch gekennzeichnet, dass jede Ecke (311) des Schaftes (31) eine nach außen weisende Rippe (312) bildet, die einen sich von der Ecke (311) erstreckenden bogenförmigen Spanschneidabschnitt (3121) und einen Sehnenabschnitt (3122) zwischen dem Spanschneidabschnitt (3121) und der Umfangsfläche (310) besitzt, wobei der Spanschneidabschnitt (3121) und der Sehnenabschnitt (3122) an der Verbindungsstelle eine Schneidkante (3124) bilden, die sich an dem größten Außendurchmesser des Schaftes (31) befindet, und wobei zwischen jedem Sehnenabschnitt (3122) und der Umfangsfläche (310) ein Spanaufnahmeraum (3125) gebildet ist.

Der Erfindung liegt die Aufgabe zu Grunde, das Einschraubverhalten der gattungsgemäßen Schraube zu verbessern.

Erfindungsgemäß wird dies durch die Merkmale von Anspruch 1 gelöst.

Dabei basiert die Erfindung auf der Erkenntnis, dass ein Versagen des Schraubelementes im Bereich ihrer Spitze, das bei einem Einschrauben in harte Materialien auftreten könnte, durch eine unzureichende Haltekraft bedingt wird. Gemäß der Erfindung ist den Stirnkantenflächen des polygonalen Abschnitts ein zylinderförmiger Abschnitt vorgelagert, und somit wird der sich konisch verjüngende Abschnitt der Schraubenspitze gegenüber der bekannten Schraube von den Stirnkantenflächen weg verlagert sowie in der Länge verkürzt. Erfindungsgemäß ist es von Vorteil, wenn die Steigung 40 % bis 70 % vom Nenndurchmesser beträgt. Die Länge der Schraubenspitze beträgt insbesondere das 1,0- bis 2,0-fache der Steigung des Schraubengewindes, insbesondere des auf der Schraubenspitze verlaufenden Schraubengewindes.

Es ist von Vorteil, wenn die Länge der Schraubenspitze das 1,0- bis 1,5-fache der Steigung beträgt.

Es kann ebenfalls von Vorteil sein, wenn die Spitzenlänge größer ist als das 1,5-fache und kleiner/gleich dem 2,0-fachen der Steigung des Schraubgewindes ist, wobei insbesondere die Steigung 40 % bis 50 % vom Nenndurchmesser beträgt.

Weiterhin kann es erfindungsgemäß von Vorteil sein, wenn der Durchmesser des zylindrischen Spitzenabschnitts 40 % bis 60 % des Kerndurchmessers des Schraubenschaftes beträgt, wobei z. B. der Kerndurchmesser des Schraubenschaftes 55 % bis 70 % des Nenndurchmessers, vorzugsweise 60 % bis 65 % des Nenndurchmessers beträgt.

In vorteilhafter Ausführung der Erfindung kann der Durchmesser des zylindrischen Spitzenabschnittes 50 % des Kerndurchmessers des Schraubenschaftes des Schraubelementes betragen.

Erfindungsgemäß ist es von Vorteil, wenn der Spitzenwinkel, d. h. der Innenwinkel, des sich verjüngenden Spitzenabschnitts, 20 ° bis 40 °, insbesondere 30 ° beträgt.

In vorteilhafter Ausführungsform beträgt die Länge des zylindrischen Abschnittes der Schraubenspitze 25 % bis 50 % der Gesamtspitzenlänge, vorzugsweise 40 % der Gesamtspitzenlänge, und die Länge des konischen ersten Spitzenabschnittes beträgt vorzugsweise 50 % bis 75 % der gesamten Spitzenlänge, vorzugsweise 60 % der gesamten Spitzenlänge.

Durch Ausbildung der Schraubenspitze gemäß der Erfindung werden die Verformungskräfte besser aufgenommen und ein Verbiegen des Spitzenabschnitts verhindert.

Weitere vorteilhafte Ausführungen sind in den Unteransprüchen enthalten und die Erfindung wird an Hand der in den einzelnen Figuren dargestellten Ausführungsbeispiele näher beschrieben. Es zeigen:
- Fig. 1: eine perspektivische Ansicht eines erfindungsgemäßen Schraubelementes,
- Fig. 2: eine perspektivische Ansicht des Schraubelementes gemäß Fig. 1, jedoch ohne Schraubgewinde,
- Fig. 3: einen Längsschnitt durch Fig. 2, jedoch ohne Schraubkopf,
- Fig. 3a bis Fig. 3c: Schnittansichten gemäß den Schnittlinien A-A, B-B und C-C in Fig. 3,

- Fig. 4, Fig. 5 und Fig. 6: Schnitte durch alternative Ausführungsformen des polygonalen Spitzenabschnittes des erfindungsgemäßen Schraubelementes,
- Fig. 7: eine Seitenansicht des erfindungsgemäßen Schraubelementes gemäß Fig. 1,
- Fig. 7a bis Fig. 7c: Schnitte durch das erfindungsgemäße Schraubelement gemäß Fig. 7 entlang den Schnittlinien A-A, B-B und C-C,
- Fig. 8: eine Seitenansicht des Schraubelementes gemäß Fig. 7, jedoch in einer gegenüber der Stellung in Fig. 7 um 45 ° gedrehten Stellung,
- Fig. 8a bis Fig. 8c: Schnittdarstellungen entlang der Schnitte A-A, B-B und C-C in Fig. 8,
- Fig. 9: eine perspektivische Ansicht einer weiteren Ausbildungsform eines erfindungsgemäßen Schraubelementes,
- Fig. 10: eine perspektivische Ansicht des erfindungsgemäßen Schraubelementes gemäß Fig. 9, jedoch ohne Schraubgewinde.

In den verschiedenen Figuren der Zeichnung sind gleiche Teile stets mit denselben Bezugszeichen versehen.

Zu der anschließenden Beschreibung wird beansprucht, dass die Erfindung nicht auf die Ausführungsbeispiele beschränkt ist.

Ein erfindungsgemäßes Schraubenelement 1 umfasst, wie in den Figuren dargestellt ist, einen Gewindeschaft 2 und eine an dessen einem Ende ausgebildete Schraubenspitze 4 sowie an einen der Schraubenspitze 4 gegenüberliegenden Ende einen Schraubenkopf 5, der einen Kraftangriff 7 für ein Drehwerkzeug aufweist. Der Schraubenkopf 5 kann beispielsweise als Senkkopf, Rundkopf oder Flachkopf ausgebildet sein, auch kann der Schraubenkopf 5 als zylindrische Verlängerung des Gewindeschaftes 2 geformt sein. Der Kraftangriff 7 kann als Schlitz-, Kreuzschlitz- oder als Innenkraftangriff beispielsweise in Form eines Innensechskant oder Innensterns oder aber auch z. B. als Außensechskant am Schraubenkopf 5 ausgebildet sein.

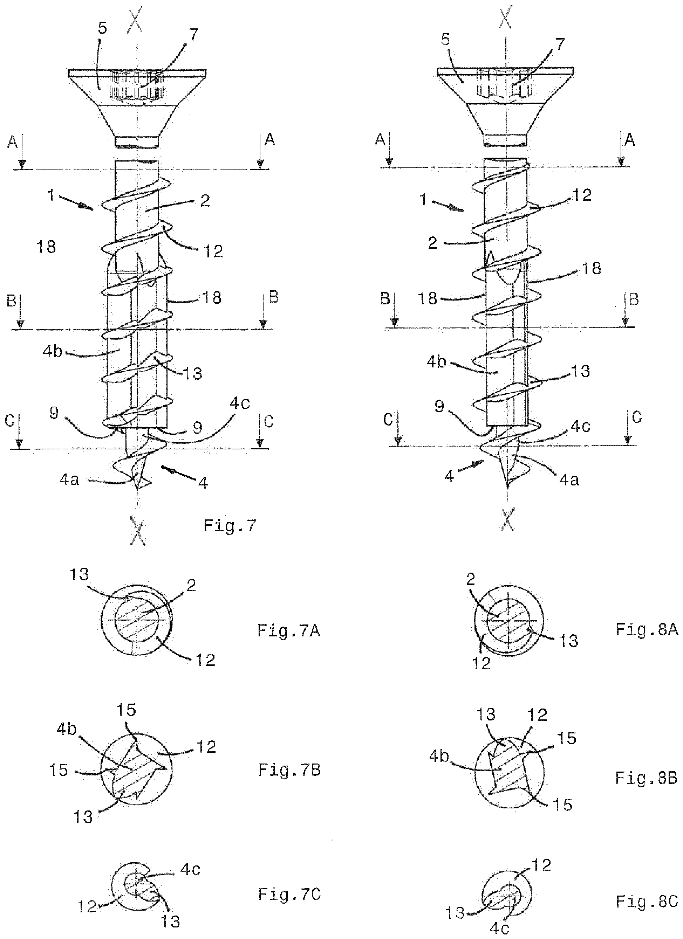

Auf dem Gewindeschaft 2 und auf der Schraubenspitze 4 verläuft ein Schraubgewinde 12. Das Gewinde 12 wird vorzugsweise aus einem schraubenlinienförmig verlaufenden Gewindegang 13 gebildet, der z. B. im radialen Querschnitt bezüglich einer Längs-Mittelachse X-X des Schraubelements 1 dreieckförmig ausgebildet ist, siehe Fig. 7, 8. Es liegt ebenfalls im Rahmen der Erfindung, wenn das erfindungsgemäße Gewinde 12 als mehrgängiges Gewinde, beispielsweise aus zwei umfangsgemäß versetzt angeordneten schraubenlinienförmigen Gewindegängen ausgebildet ist.

Das Schraubgewinde 12 ist vorteilhafterweise als selbstschneidendes bzw. selbstformendes Gewinde ausgebildet. Das Gewinde 12 kann eine konstante Gewindesteigung oder aber eine variable Gewindesteigung über den gesamten Gewindebereich aufweisen. Das Gewinde 12 weist einen maximalen Gewindedurchmesser d_{g}, den Nenndurchmesser des erfindungsgemäßen Schraubenelementes 1, auf, der im dargestellten Ausführungsbeispiel im Bereich des Gewindeschaftes 2 konstant ist, so dass in diesem Bereich keine Veränderung des Gewindedurchmessers vorhanden ist. Die Gewindesteigung des Schraubgewindes 12 beträgt vorzugsweise 40 % bis 70 % des Nenndurchmessers d_{g} des Schraubgewindes 12, und zwar bezogen auf ein eingängiges Gewinde.

Der Kerndurchmesser dₛ des Schraubelementes 1 beträgt 55 % bis 70 % des Nenndurchmessers d_{g}, vorzugsweise 60 % bis 65 % des Nenndurchmessers d_{g}.

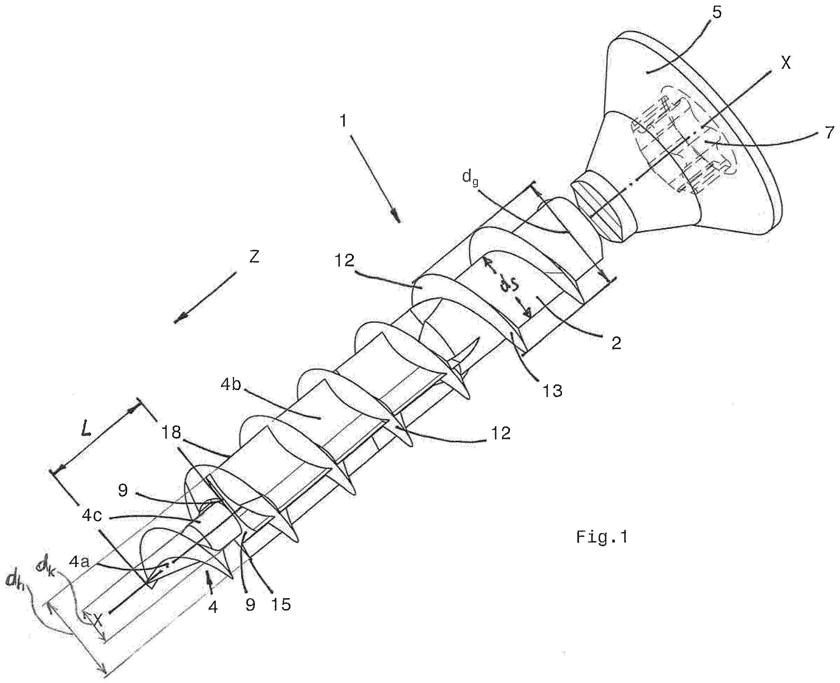

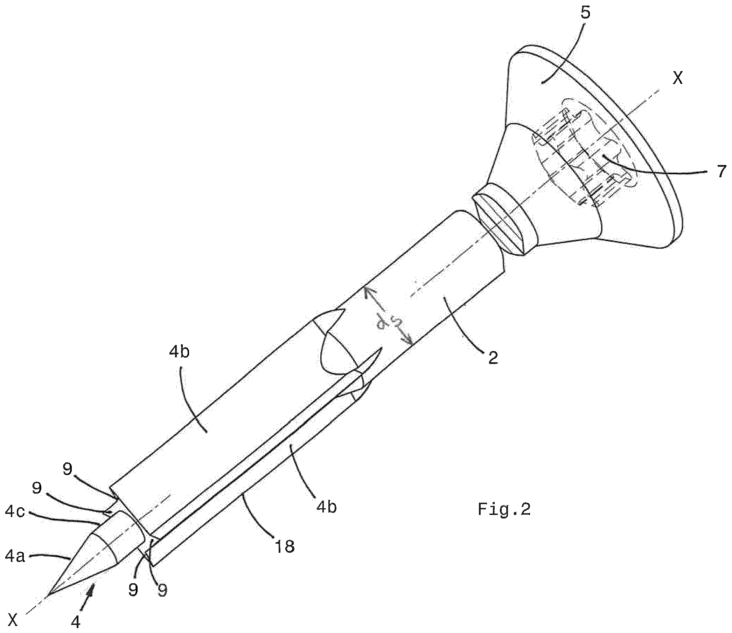

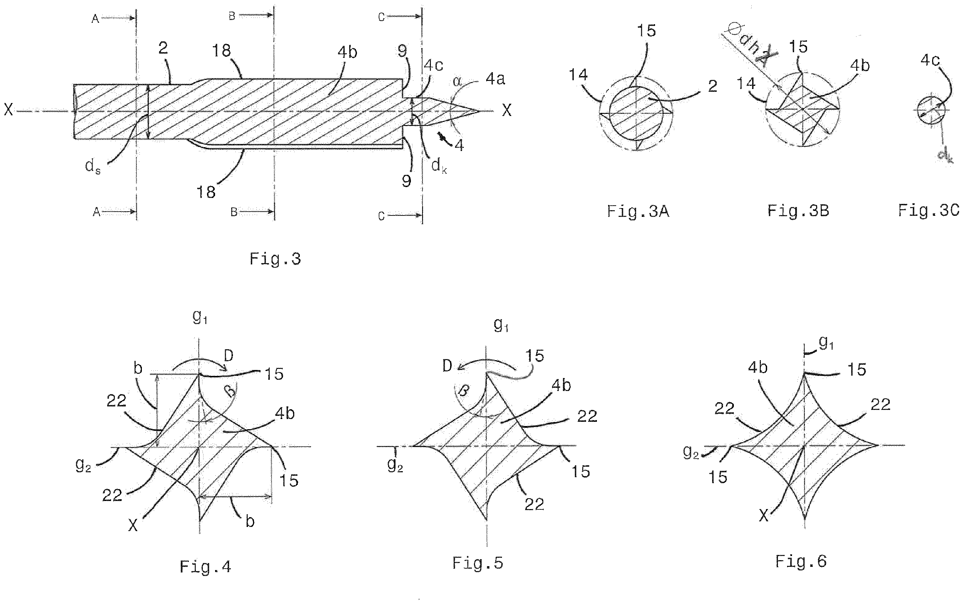

Die Schraubenspitze 4 besteht erfindungsgemäß aus zwei Spitzenabschnitten 4a und 4c, und zwar den in Einschraubrichtung Z gesehen vorderen ersten, sich zum Schraubelementende hin verjüngenden Spitzenabschnitt 4a und den daran anschließenden zweiten Spitzenabschnitt 4c. An diesen schließt sich ein Abschnitt 4b an mit einem im Querschnitt senkrecht zu der Längs-Mittelachse X-X gesehen polygonalen Querschnitt seines Kerns mit einem durch seine Polygonecken verlaufenden Hüllkreis 14 mit einem Durchmesser dₕ, siehe Fig. 3b. Der erste Spitzenabschnitt 4a ist als Spitzkegel ausgebildet, wie in Fig. 1 dargestellt ist, wobei sein Kegelwinkel α 20 ° bis 40 °, insbesondere 30 ° betragen kann, siehe Fig. 3. Der kegelförmige erste Spitzenabschnitt 4a weist einen in Bezug auf die mittlere Längsachse X-X senkrecht verlaufenden kreisförmigen Kernquerschnitt auf. Das Schraubgewinde 12 verläuft über die gesamte Gewindespitze 4, wobei seine radiale Gewindehöhe bis zum Ende des kegelförmigen Abschnitts 4a bis auf Null abnimmt. Im Bereich des zweiten zylindrischen Spitzenabschnitts 4c, der im Querschnitt kreisförmig ausgebildet ist, verläuft das Gewinde 12 mit vorzugsweise abnehmender Gewindehöhe. Im Bereich des polygonalen Abschnittes 4b verläuft das Gewinde 12 mit dem Nenndurchmesser d_{g} wie im Bereich des Gewindeschaftes 2. Der Durchmesser dₕ des Hüllkreises 14 des polygonalen Abschnittes 4b ist größer als der Kerndurchmesser dₛ des Schraubenkerns, siehe Fig. 3. Ein Kerndurchmesser dₖ des zylindrischen Spitzenabschnittes 4c ist kleiner als der Kerndurchmesser dₛ und beträgt vorzugsweise 40 % bis 60 % vom Kerndurchmesser dₛ des Schaftes 2, insbesondere 50 % des Kerndurchmessers dₛ. Erfindungsgemäß ist am Übergang zwischen dem zweiten Spitzenabschnitt 4c zum polygonalen Abschnitt 4b an dem Abschnitt 4b mindestens eine in Bezug auf die Längs-Mittelachse X-X radial gerichtete, und zwar im Sinne einer Durchmesservergrößerung in einem auf dem Hüllkreis 14 des Abschnittes 4b liegenden Eckpunkt 15 des polygonalen Querschnittes endende Stirnkantenfläche 9 vorhanden. Diese radial verlaufende Stirnkantenfläche 9 bildet eine Art Schneid- bzw. Fräskante. Im dargestellten Ausführungsbeispiel besitzt der polygonale Querschnitt des Abschnittes 4b vier Eckpunkte 15, so dass sich vier Stirnkantenflächen 9 ausbilden, siehe Fig. 2, und zwar in Bezug auf den Umfang des erfindungsgemäßen Schraubelementes 1.

Wie insbesondere aus Fig. 1 zu erkennen ist, verläuft das Schraubgewinde 12 über den ersten, den zweiten Spitzenabschnitt 4a, 4c und den Abschnitt 4b ohne Unterbrechung, so dass auch im Bereich der Stirnflächenkanten 9 das Schraubgewinde 12 ausgebildet ist.

In Fig. 2, in der nur der Schraubenkern des erfindungsgemäßen Schraubelementes 1, und zwar der Schraubenkern im Bereich des Gewindeschaftes 2 sowie im Bereich der Gewindespitze 4, dargestellt ist, ist deutlich die Ausbildung der Stirnflächenkante 9 im Übergang vom zweiten Spitzenabschnitt 4c zum Abschnitt 4b zu erkennen. Hierbei verlaufen die Stirnflächenkanten 9 radial zur Längsachse X-X. Vorteilhafterweise besitzt der nicht in Fig. 2 dargestellte Hüllkreis 14 des polygonalen Abschnittes 4b einen Durchmesser dₕ, der größer/gleich einem insbesondere maximalen Kerndurchmesser dₛ des im Querschnitt kreisförmigen Gewindeschaftes 2 ist. Hierbei ist es von Vorteil, wenn der Hüllkreisdurchmesser dₕ des im Querschnitt polygonalen Abschnittes 4b über seine axiale Länge konstant ist. Wie den einzelnen Figuren zu entnehmen ist, ist der Durchmesser dₖ des zylinderförmigen zweiten Spitzenabschnittes 4c an seiner Grundfläche im Übergang zwischen dem zweiten Spitzenabschnitt 4c zum polygonalen Abschnitt 4b kleiner als der maximale Kerndurchmesser dₛ des Gewindeschaftes 2. Weiterhin ist vorteilhafterweise vorgesehen, dass das Schraubgewinde 12 im Bereich des Abschnittes 4b und ebenfalls auf dem Schaftabschnitt 2 einen Nenndurchmesser d_{g} besitzt, der größer ist als der maximale Hüllkreisdurchmesser dₕ des polygonalen Abschnittes 4b.

Die Steigung des Gewindes 12 beträgt 40 % bis 70 % vom Nenndurchmesser d_{g} des Schraubelementes 1. Die Gewindelänge ist insbesondere größer/gleich dem 4-fachen des Nenndurchmessers d_{g} mit einer Steigung von insbesondere 60 % - 65 % des Nenndurchmessers d_{g}. Bei Gewindelängen kleiner als dem 4-fachen des Nenndurchmessers d_{g} beträgt die Steigung vorzugsweise 40 % bis 50 % des Nenndurchmessers d_{g}.

Bei Gewindelängen größer/gleich dem 4-fachen des Nenndurchmessers d_{g} kann die Steigung ebenfalls 40 % bis 45 % des Nenndurchmesser d_{g} betragen.

In dem dargestellten Ausführungsbeispiel verläuft das Gewinde 12 über die gesamte Länge des Gewindeschaftes 2. Es liegt ebenfalls im Rahmen der Erfindung, wenn das Gewinde 12 nicht über die gesamte Länge des Gewindeschaftes 2 verläuft, sondern dass beispielsweise zwischen dem Gewindeabschnitt des Gewindeschaftes 2 und dem Schraubenkopf 5 ein gewindefreier Schaftabschnitt ausgebildet ist, so dass nur ein Teilgewinde auf dem Gewindeschaft 2 vorhanden ist. Das Teilgewinde kann auch dadurch gebildet sein, dass sich an den Schraubenkopf 5 ein Gewindeabschnitt anschließt, dem ein gewindefreier Schaftabschnitt folgt und hinter diesem wiederum sich ein Gewindeabschnitt auf dem Schaft anschließt.

Weiterhin kann es von Vorteil sein, wenn die Länge L des Spitzenabschnittes 4 im Bereich von mindestens dem 1,0-fachen bis maximal dem 2,0-fachen der Steigung s des Gewindes 12 liegt, insbesondere des Gewindes 12 im Bereich des Spitzenabschnittes 4. Von Vorteil liegt die Länge L im Bereich des 1,0-bis 1,5-fachen der Gewindesteigung s oder im Bereich größer dem 1,5-fachen und kleiner/gleich dem 2,0-fachen der Gewindesteigung s.

Wie insbesondere den Fig. 3b und 4 bis 6 zu entnehmen ist, ist der Abschnitt 4b derart im Querschnitt polygonal ausgebildet, dass er ein Viereck bildet mit vier Eckpunkten 15. Hierbei ist es zweckmäßig, wenn die vier Eckpunkte 15 jeweils auf orthogonal zur mittleren Längsachse X-X verlaufenden, sich schneidenden Geraden g₁, g₂ des polygonalen Querschnittes liegen und jeweils von der Längsachse X-X den gleichen Abstand b besitzen. Hierbei ist es zweckmäßig, wenn - im Querschnitt gesehen - die die Eckpunkte 15 verbindenden Kernseiten 22 konkav ausgebildet sind, wie dies insbesondere in Fig. 6 zu erkennen ist. Die Kernseiten 22 können auch geradlinig verlaufen. In den dargestellten Ausführungsbeispielen ist ein Viereck als polygonaler Querschnitt des Abschnittes 4b dargestellt, es kann aber ebenfalls erfindungsgemäß ein dreieckiger Querschnitt gewählt sein oder ein Querschnitt, der mehr als vier Ecken aufweist. Bevorzugt wird ein regelmäßiger Querschnitt ausgebildet. Die in Längsrichtung des im Querschnitt Abschnittes 4b hintereinanderliegenden Eckpunkte 15 der einzelnen Querschnitte liegen auf parallel zur mittleren Längsachse X-X verlaufenden Geraden, so dass sich gradlinige Kernkanten 18 bilden, und damit eine zusätzliche Fräswirkung besitzen können, sofern sich eine Rückverformung des Materials ergibt, in dem das erfindungsgemäße Schraubelement 1 eingeschraubt wird. Wie in Fig. 6 dargestellt ist, kann der polygonale viereckige Querschnitt des Abschnittes 4b jeweils um die orthogonalen Geraden g₁, g₂ klappsymmetrisch ausgebildet sein. In Fig. 4 ist eine davon abweichende Form dargestellt, wobei die Kernseiten 22 bzw. die daraus resultierenden Kernseitenflächen des gesamten Abschnitts derart ausgebildet sind, dass sich eine Unsymmetrie in Bezug auf die orthogonalen Geraden g₁, g₂ ergibt. In Fig. 4 ist eine Ausgestaltung dargestellt, bei der die in Drehrichtung zeigenden, von dem jeweiligen Eckpunkt 15 bzw. den Kernkanten 18 ausgehenden Seitenabschnitte bzw. Flächenabschnitte radial steil in Richtung auf die Längsachse X-X derart verlaufen, dass sie mit der jeweiligen durch den Eckpunkt 15 verlaufenden Geraden g₁, g₂ einen spitzen Winkel β < 20 ° einschließen und dann anschließend nahezu gradlinig zum in Drehrichtung folgenden Eckpunkt 15 verlaufen. In Fig. 4 ist eine derartige erfindungsgemäße Form für eine Drehrichtung D im Uhrzeigersein dargestellt, und in Fig. 5 ist eine entsprechende Form mit der Drehrichtung D entgegen dem Uhrzeigersinn dargestellt. In den Fig. 3 bis 3c ist eine polygonale Querschnittsform des Abschnittes 4b entsprechend Fig. 4 dargestellt. Eine entsprechende Querschnittsform des polygonalen Abschnittes 4b ist auch in den Fig. 7 und 8 gewählt. Durch die Ausbildung des polygonalen Querschnittes gemäß den Fig. 4 und 5 wird eine verbesserte Schneidwirkung bzw. Fräswirkung der Schneidkanten 18 erreicht, was für die Ausführungsform gemäß Fig. 4 gilt. Bei der Ausführungsform gemäß Fig. 5 wird demgemäß bewirkt, dass bei einer Drehrichtung D, die einer Drehbeaufschlagung beim Lösen einer erfindungsgemäßen Schraube vorhanden ist, einem Lösen ein höherer Widerstand entgegengesetzt wird.

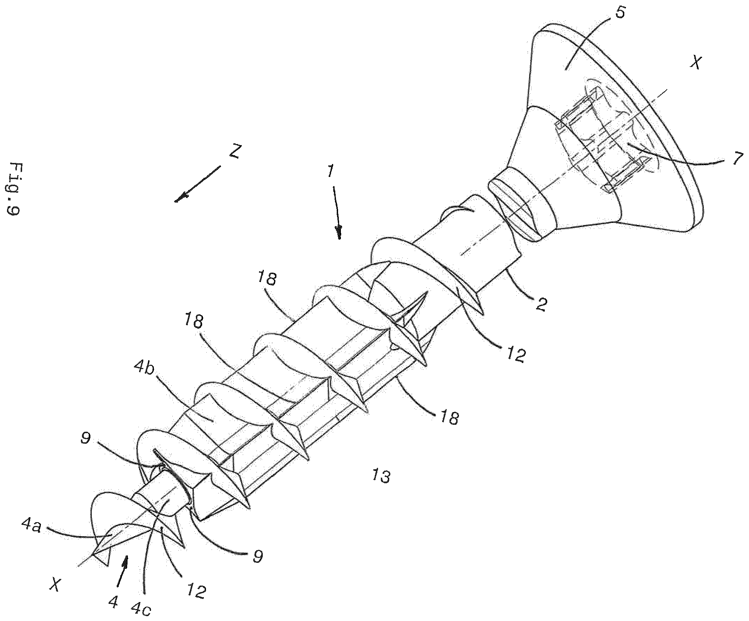

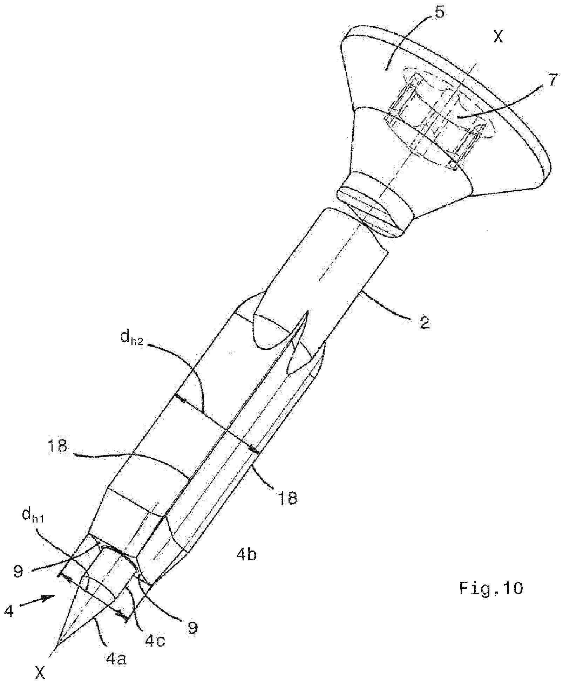

In den Fig. 9 und 10 ist eine Ausgestaltung eines erfindungsgemäßen Schraubelementes 1 dargestellt, das im Wesentlichen entsprechend dem Schraubelement 1 gemäß den Fig. 1 bis 8 entspricht, wobei jedoch insofern ein Unterschied besteht, dass der Hüllkreisdurchmesser dₕ des Hüllkreises 14 des polygonalen Abschnittes 4b nicht über die gesamte Länge des Abschnittes 4b konstant und gleich groß ist, sondern, dass der Hüllkreisdurchmesser dₕ beginnend mit einem Durchmesser dₕ₁ im Bereich der Stirnkantenflächen 9 in Richtung auf den Gewindeschaft 2 größer wird, und zwar bevorzugt kontinuierlich größer wird, bis zu dem maximalen Hüllkreisdurchmesser dₕ₂ im übrigen Bereich des polygonalen Abschnittes 4b. Hierbei beträgt die Länge, über die eine Zunahme des Hüllkreisdurchmessers dₕ bis zum maximalen Durchmesser erfolgt, vorzugsweise 10 % bis 50 % der gesamten Länge des polygonalen Abschnittes 4b. Die Durchmesserdifferenz zwischen dem Hüllkreisdurchmesser dₕ₁ im Bereich der Stirnflächenkante 9 und des maximalen Hüllkreisdurchmessers dₕ₂ des polygonalen Abschnittes 4b, in dem ein konstanter Hüllkreisdurchmesser dₕ₂ vorhanden ist, beträgt 5 % bis 20 % des maximalen Hüllkreisdurchmessers dₕ.

Bei dem erfindungsgemäßen Schraubelement 1 verläuft, wie in den einzelnen Figuren dargestellt, eine äußere Gewindekante des Gewindes 12 im Bereich des Gewindeschaftes 2 und auch über den polygonalen Abschnitt 4b hinweg mit konstantem Radius und konstanter Gewindehöhe. Über den Bereich des kegelstumpfförmigen Spitzenabschnittes 4 hinweg und bis zu dessen Ende verläuft der Gewindegang 13 spiralförmig mit kontinuierlich bis auf Null abnehmendem Radius und abnehmender Gewindehöhe.

In einer in den Zeichnungen nicht dargestellten, vorteilhaften Ausgestaltung kann zudem die Gewindekante des Gewindes 12 zumindest im Bereich des Spitzenabschnittes 4 und gleichzeitig im Bereich der Gewindeflankenfläche derart wellenförmig ausgebildet sein, das eine Folge von Wellenbergen und Wellentälern vorhanden ist. Hierzu wird im vollen Umfange auf das Dokument DE 3335092 A1 verwiesen.

Die Erfindung ist nicht auf die dargestellten und beschriebenen Ausführungsbeispiele beschränkt, sondern umfasst auch alle im Sinne der Erfindung gleichwirkenden Ausführungen.

### Bezugszeichenliste:

- 1: Schraubelement
- 2: Gewindeschaft
- 4: Schraubenspitze
- 4a: Spitzenabschnitt
- 4b: polygonaler Abschnitt
- 4c: zweiter zylindrischer Spitzenabschnitt
- 5: Schraubenkopf
- 7: Kraftangriff
- 9: Stirnkantenfläche (Stirnflächenkante)
- 12: Schraubgewinde
- 13: Gewindegang
- 14: Hüllkreis
- 15: Eckpunkte
- 18: Kernkanten (Schneidkanten)
- 22: Kernseiten
- b: Abstand
- D: Drehrichtung
- d_{g}: Gewindedurchmesser
- dₕ: Durchmesser des Hüllkreises
- dₕ₁: Durchmesser des Hüllkreises
- dₕ₂: Durchmesser des Hüllkreises
- dₖ: Kerndurchmesser von 4c
- dₛ: Kerndurchmesser des Gewindeschaftes 2
- g₁: orthogonale Geraden
- g₂: orthogonale Geraden
- X-X: Mittlere Längsachse
- Z: Einschraubrichtung

## Patentansprüche

1. Schraubelement (1), umfassend einen Gewindeschaft (2) und eine an einem Schaftende ausgebildete Schraubenspitze (4) und einen am gegenüberliegenden Schaftende ausgebildeten Schraubenkopf (5) mit einem Kraftangriff (7) und mit einem auf dem Gewindeschaft (2) und der Schraubenspitze (4) verlaufenden Schraubgewinde (12),
wobei die Schraubenspitze (4) einen in Einschraubrichtung (Z) gesehen vorderen, sich zum Schraubelementende hin verjüngenden Spitzenabschnitt (4a) und einen am Gewindeschaft ausgebildeten polygonalen Abschnitt (4b) mit einem im Querschnitt gesehen polygonalen Querschnitt aufweist, dessen Hüllkreisdurchmesser (dₕ) größer ist als ein Kerndurchmesser (dₖ) der Schraubenspitze (4) sowie der polygonale Querschnitt einen auf dem Hüllkreis (14) des polygonalen Abschnitts (4b) liegenden Eckpunkt (15) aufweist, in dem eine in Bezug auf eine Längsmittelachse (X-X) im Sinne einer Durchmesservergrößerung radial gerichtete Stirnkantenfläche (9) endet, und wobei die Schraubenspitze (4) einen ersten, sich verjüngenden Spitzenabschnitt (4a) mit einem kreisförmigen Querschnitt sowie einen zwischen dem ersten Spitzenabschnitt (4a) und dem polygonalen Abschnitt (4b) ausgebildeten zweiten, zylinderförmigen Spitzenabschnitt (4c) mit einem kreisförmigen Querschnitt aufweist,
wobei das Schraubgewinde (12) über den ersten und zweiten Spitzenabschnitt (4a, 4c) der Schraubenspitze (4) ohne Unterbrechung durchlaufend ausgebildet ist, und wobei der Kerndurchmesser (dₖ) des zylinderförmigen zweiten Spitzenabschnittes (4c) an seiner Grundfläche im Übergang zwischen dem zweiten Spitzenabschnitt (4c) zum polygonalen Abschnitt (4b) kleiner als der maximale Kerndurchmesser (dₛ) des Gewindeschaftes (2) ausgebildet ist.

2. Schraubelement (1) nach Anspruch 1,
**dadurch gekennzeichnet, dass** die Spitzenlänge (L) der Schraubenspitze (4) das 1,0- bis 2,0-fache der Steigung des Schraubgewindes (12), insbesondere des auf der Schraubenspitze (4) verlaufenden Schraubgewindes (12) beträgt.

3. Schraubelement (1) nach Anspruch 1,
**dadurch gekennzeichnet, dass** die Spitzenlänge (L) der Schraubenspitze (4) größer dem 1,5-fachen und kleiner/gleich dem 2,0-fachen der Steigung des Schraubgewindes (12) ist.

4. Schraubelement (1) nach einem der Ansprüche 1 bis 3,
**dadurch gekennzeichnet, dass** ein Durchmesser dₖ des zweiten zylindrischen Spitzenabschnittes (4c) 40 % bis 60 % des Kerndurchmessers (dₛ) des Schraubenschaftes (2) beträgt.

5. Schraubelement (1) nach Anspruch 4,
**dadurch gekennzeichnet, dass** der Durchmesser dₖ des zweiten zylindrischen Spitzenabschnittes (4c) 50 % des Kerndurchmessers (dₛ) des Schraubenschaftes (2) beträgt.

6. Schraubelement (1) nach einem der Ansprüche 1 bis 5,
**dadurch gekennzeichnet, dass** der Innenwinkel des sich verjüngenden ersten Spitzenabschnittes (4a) 20 ° bis 40 °, vorzugsweise 30 ° beträgt.

7. Schraubelement (1) nach einem der Ansprüche 1 bis 6,
**dadurch gekennzeichnet, dass** der Kerndurchmesser (dₛ) des Gewindeschaftes (2) 55 % bis 70 % des Schrauben-Nenndurchmessers (d_{g}) beträgt, insbesondere 60 % bis 65 %.

8. Schraubelement (1) nach einem der Ansprüche 1 bis 7,
**dadurch gekennzeichnet, dass** die Steigung des Schraubgewindes (12) 40 % bis 70 % des Nenndurchmessers (d_{g}) beträgt und vorzugsweise bei Gewindelängen von größer/gleich dem 4-fachen des Nenndurchmessers (d₉) 40 % bis 45 % oder 60 % bis 65 % des Nenndurchmessers (d₉) beträgt und insbesondere bei Gewindelängen kleiner dem 4-fachen des Nenndurchmessers (d_{g}) 40 % his 50 % des Nenndurchmessers (d_{g}) beträgt.

9. Schraubelement (1) nach einem der Ansprüche 1 bis 8,
**dadurch gekennzeichnet, dass** der Hüllkreis (14) des polygonalen Abschnittes (4b) einen Durchmesser (dₕ) besitzt, der größer/gleich einem maximalen Kerndurchmesser (dₛ) des vorzugsweise im Querschnitt kreisförmigen Gewindeschaftes (2) ist.

10. Schraubelement (1) nach einem der Ansprüche 1 bis 9,
**dadurch gekennzeichnet, dass** der Hüllkreisdurchmesser (dₕ) des polygonalen Abschnittes (4b) des Schraubenschaftes (4) über seine axiale Länge konstant ist.

11. Schraubelement (1) nach einem der Ansprüche 1 bis 10,
**dadurch gekennzeichnet, dass** der polygonale Abschnitt (4b) einen Hüllkreisdurchmesser (dₕ₁) am Übergang zum zweiten Spitzenabschnitt (4c) besitzt, der kleiner ist als der Hüllkreisdurchmesser (dₕ₂), in dem dem Gewindeschaft (2) zugekehrten Ende des polygonalen Abschnittes (4b).

12. Schraubelement (1) nach einem der Ansprüche 1 bis 11,
**dadurch gekennzeichnet, dass** der Kerndurchmesser (dₖ) des zweiten zylindrischen Spitzenabschnittes (4c) an seiner Grundfläche am Übergang zum polygonalen Abschnitt (4b) kleiner ist als der insbesondere maximale Kerndurchmesser (dₛ) des Gewindeschaftes (2).

13. Schraubelement (1) nach einem der Ansprüche 1 bis 12,
**dadurch gekennzeichnet, dass** das Schraubgewinde (12) im Bereich des polygonalen Abschnittes (4b) und dem übrigen Schaftabschnitt (2) den Nenndurchmesser (d_{g}) besitzt, der größer ist als der maximale Hüllkreisdurchmesser (dₕ) im Bereich des polygonalen Abschnittes (4b).

14. Schraubelement (1) nach einem der Ansprüche 1 bis 13,
**dadurch gekennzeichnet, dass** der Gewindeaußendurchmesser auf der Schraubenspitze (4) vom Schraubelementende aus von 0 bis zum Nenndurchmesser (d₉) auf dem polygonalen Abschnitt (4b) ansteigt.

15. Schraubelement (1) nach einem der Ansprüche 1 bis 14,
**dadurch gekennzeichnet, dass** der polygonale Querschnitt des polygonalen Abschnittes (4b) mindestens drei, vorzugsweise vier Eckpunkte (15) aufweist, die auf dem Hüllkreis (14) des polygonalen Abschnittes (4b) liegen.

16. Schraubelement (1) nach Anspruch 15,
**dadurch gekennzeichnet, dass** die vier Eckpunkte (15) auf zwei sich in der mittleren Längsachse (X-X) orthogonal schneidenden Geraden (g₁, gz) des polygonalen Querschnitts schneiden und jeweils von der Längsachse (X-X) den gleichen Abstand (b) besitzen.

17. Schraubelement (1) nach Anspruch 15 oder 16,
**dadurch gekennzeichnet, dass** die vier Eckpunkte (15) des polygonalen Querschnitts des polygonalen Abschnittes (4b) jeweils in Längsrichtung hintereinanderliegend auf parallel zur mittleren Längsachse (X-X) verlaufenden Geraden angeordnet sind, so dass gradlinige Kernkanten (18) gebildet werden.

18. Schraubelement (1) nach Anspruch 16 oder 17,
**dadurch gekennzeichnet, dass** die Eckpunkte (15) des polygonalen Querschnitts durch Kernseiten (22) verbunden sind, die eine derartige konkave Ausgestaltung aufweisen, dass ein polygonaler Querschnitt gebildet ist, der jeweils zu den durch die Eckpunkte (15) verlaufenden orthogonalen Geraden (g₁, g₂) klappsymmetrisch ausgebildet ist.

19. Schraubelement (1) nach Anspruch 16 oder 17,
**dadurch gekennzeichnet, dass** die Kernseiten (22) die die Eckpunkte (15) des polygonalen Querschnitts verbinden, derart asymmetrisch in Bezug auf die durch die Eckpunkte (15) verlaufenden orthogonalen Geraden (gi, g₂) ausgebildet sind, dass in Eindrehrichtung (D) oder in Ausdrehrichtung (D) eines erfindungsgemäßen Schraubelementes (1) eine erhöhte Schneid- bzw. Fräswirkung erzielt wird.

20. Schraubelement (1) nach einem der Ansprüche 1 bis 19,
**dadurch gekennzeichnet, dass** das Gewinde (12) eine äußere Gewindekante aufweist, die in axialer Richtung der Mittel-Längsachse (X-X) gesehen spiralförmig und im Bereich des Gewindeschaftes (2) im konstanten Radius und über den Bereich der Schraubenspitze (4) hinweg spiralförmig mit kontinuierlich abnehmendem Radius verläuft.

## Claims

1. Screw element (1), comprising a threaded shaft (2) and a screw tip (4) formed at a shaft end and a screw head (5) formed at the opposite shaft end with a force application means (7) and with a screw thread (12) extending on the threaded shaft (2) and the screw tip (4),
wherein the screw tip (4) has a front tip section (4a) tapering toward the screw element end, when viewed in the screwing-in direction (Z), and a polygonal section (4b) formed on the threaded shaft with a polygonal cross section, when viewed in cross section, whose enveloping circle diameter (dₕ) is greater than a core diameter (dₖ) of the screw tip (4), and the polygonal cross section has a corner point (15) lying on the enveloping circle (14) of the polygonal section (4b), and a front edge surface (9), radially oriented with respect to a longitudinal center axis (X-X), ends in said corner point in the sense of an increased diameter, and wherein the screw tip (4) has a first tapering tip section (4a) with a circular cross section and a second, cylindrical tip section (4c) with a circular cross section formed between the first tip section (4a) and the polygonal section (4b),
wherein the screw thread (12) is continuously formed without interruption across the first and second tip sections (4a, 4c) of the screw tip (4), and wherein the core diameter (dₖ) of the second cylindrical tip section (4c) at its base surface is smaller at the transition between the second tip section (4c) to the polygonal section (4b) than the maximum core diameter (dₛ) of the threaded shaft (2).

2. Screw element (1) according to claim 1,
**characterized in that** the tip length (L) of the screw tip (4) is 1.0 to 2.0 times the pitch of the screw thread (12), in particular of the screw thread (12) extending on the screw tip (4).

3. Screw element (1) according to claim 1,
**characterized in that** the tip length (L) of the screw tip (4) is greater than 1.5 times and less than or equal to 2.0 times the pitch of the screw thread (12).

4. Screw element (1) according to any one of claims 1 to 3,
**characterized in that** the diameter dₖ of the second cylindrical tip section (4c) is 40% to 60% of the core diameter (dₛ) of the screw shaft (2).

5. Screw element (1) according to claim 4,
**characterized in that** the diameter dₖ of the second cylindrical tip section (4c) is 50% of the core diameter (dₛ) of the screw shaft (2).

6. Screw element (1) according to any one of claims 1 to 5,
**characterized in that** the inner angle of the tapering first tip section (4a) is 20° to 40°, preferably 30°.

7. Screw element (1) according to any one of claims 1 to 6,
**characterized in that** the core diameter (dₛ) of the threaded shaft (2) is 55% to 70% of the screw nominal diameter (d_{g}), preferably 60% to 65%.

8. Screw element (1) according to any one of claims 1 to 7,
**characterized in that** the pitch of the screw thread (12) is 40% to 70% of the nominal diameter (d_{g}), and is preferably 40% to 45% or 60% to 65% of the nominal diameter (d_{g}) for thread lengths greater than or equal to 4 times the nominal diameter (d_{g}), and is preferably 40% to 50% of the nominal diameter (d_{g}) for thread lengths less than 4 times the nominal diameter (d_{g}).

9. Screw element (1) according to any one of claims 1 to 8,
**characterized in that** the enveloping circle (14) of the polygonal section (4b) has a diameter (dₕ) which is greater than or equal to a maximum core diameter (ds) of the threaded shaft (2) which is preferably circular in the cross section.

10. Screw element (1) according to any one of claims 1 to 9,
**characterized in that** the enveloping circle diameter (dₕ) of the polygonal section (4b) of the screw shaft (4) is constant across its axial length.

11. Screw element (1) according to any one of claims 1 to 10,
**characterized in that** the polygonal section (4b) has an enveloping circle diameter (dₕ₁) at the transition to the second tip section (4c) that is smaller than the enveloping circle diameter (dₕ₂) at the end of the polygonal section (4b) facing the threaded shaft (2).

12. Screw element (1) according to any one of claims 1 to 11,
**characterized in that** the core diameter (dₖ) of the second cylindrical tip section (4c) at its base surface is smaller at the transition to the polygonal section (4b) than the in particular maximum core diameter (dₛ) of the threaded shaft (2).

13. Screw element (1) according to any one of claims 1 to 12,
**characterized in that** the screw thread (12) has the nominal diameter (d_{g}) in the area of the polygonal section (4b) and in the remaining shaft section (2), which diameter is greater than the maximum enveloping circle diameter (dₕ) in the area of the polygonal section (4b).

14. Screw element (1) according to any one of claims 1 to 13,
**characterized in that** the thread outer diameter at the screw tip (4) increases from the screw element end from 0 to the nominal diameter (d_{g}) on the polygonal section (4b).

15. Screw element (1) according to any one of claims 1 to 14,
**characterized in that** the polygonal cross section of the polygonal section (4b) has at least three, preferably four corner points (15) which lie on the enveloping circle (14) of the polygonal section (4b).

16. Screw element (1) according to claim 15,
**characterized in that** the four corner points (15) intersect on two orthogonally straight lines (g₁, gz) of the polygonal cross section intersecting in the center longitudinal axis (X-X) and each is the same distance (b) from the longitudinal axis (X-X).

17. Screw element (1) according to claim 15 or 16,
**characterized in that** the four corner points (15) of the polygonal cross section of the polygonal section (4b) are each arranged one after the other on straight lines extending parallel to center longitudinal axis (X-X) in the longitudinal direction so that straight core edges (18) are formed.

18. Screw element (1) according to claim 16 or 17,
**characterized in that** the corner points (15) of the polygonal cross section are connected by core sides (22), which have a concave configuration in such a way that a polygonal cross section is formed that is configured with mirror symmetry to the straight lines (g₁, g₂) extending orthogonally through the corner points (15).

19. Screw element (1) according to claim 16 or 17,
**characterized in that** the core sides (22), which connect the corner points (15) of the polygonal section, are designed as asymmetrical with respect to the straight lines (gi, g₂) extending orthogonally through the corner points (15) in such a way that an increased cutting or milling effect is achieved in the screw-in direction (D) or in the unscrewing direction (D) of a screw element (1) according to the invention.

20. Screw element (1) according to any one of claims 1 to 19,
**characterized in that** the thread (12) has an outer thread edge which extends in a spiral shape in the axial direction, when viewed in the direction of the center longitudinal axis (X-X), and has a constant radius in the area of the threaded shaft (2) and has a continuously decreasing radius in a spiral shape in the area of the screw tip (4).

## Revendications

1. Élément de vissage (1), comprenant une tige filetée (2) et une pointe de vis (4) réalisée à une extrémité de la tige et une tête de vis (5) réalisée à l'extrémité opposée de la tige et comportant une prise de force (7) et un filetage (12) s'étendant sur la tige filetée (2) et la pointe de vis (4), la pointe de vis (4) présentant une section de pointe (4a) située à l'avant dans le sens de vissage (Z) et effilée jusqu'à l'extrémité de l'élément de vissage et une section polygonale (4b) réalisée au niveau de la tige filetée et ayant une section transversale polygonale, vue en section transversale, dont le diamètre de cercle d'enveloppe (dₕ) est supérieur à un diamètre de noyau (dₖ) de la pointe de vis (4) et la section transversale polygonale présente un point d'angle (15) se trouvant sur le cercle d'enveloppe (14) de la section polygonale (4b) et dans lequel se termine une surface d'arête frontale (9) orientée radialement par rapport à un axe moyen longitudinal (X-X) en vue d'un agrandissement du diamètre, et la pointe de vis (4) présentant une première section de pointe (4c) effilée ayant une section transversale de forme circulaire et une seconde section de pointe (4c) de forme cylindrique réalisée entre la première section de pointe (4a) et la section polygonale (4b) et dotée d'une section transversale de forme circulaire,
le filetage (12) étant réalisé au-dessus des première et seconde sections de pointe (4a, 4c) de la pointe de vis (4) sans interruption en continu, et le diamètre de noyau (dₖ) de la seconde section de pointe de forme cylindrique (4c) étant réalisé, au niveau de sa surface de base, dans la transition entre la seconde section de pointe (4c) vers la section polygonale (4b), de manière à être inférieur au diamètre de noyau maximal (ds) de la tige filetée (2).

2. Élément de vissage (1) selon la revendication 1,
**caractérisé en ce que** la longueur de pointe (L) de la pointe de vis (4) représente 1,0 à 2,0 fois le pas la tige filetée (12), en particulier du filetage (12) s'étendant sur la pointe de vis (4).

3. Élément de vissage (1) selon la revendication 1,
**caractérisé en ce que** la longueur de pointe (L) de la pointe de vis (4) représente plus de 1,5 fois et est inférieure ou égale à 2,0 fois le pas du filetage (12).

4. Élément de vissage (1) selon une des revendications 1 à 3,
**caractérisé en ce qu'**un diamètre dk de la seconde section de pointe cylindrique (4c) représente 40 % à 60 % du diamètre de noyau (dₛ) de la tige filetée (2).

5. Élément de vissage (1) selon la revendication 4,
**caractérisé en ce que** le diamètre dk de la seconde section de pointe cylindrique (4c) représente 50 % du diamètre de noyau (ds) de la tige filetée (2).

6. Élément de vissage (1) selon une des revendications 1 à 5,
**caractérisé en ce que** l'angle intérieur de la première section de pointe (4a) effilée est de 20° à 40°, de préférence 30°.

7. Élément de vissage (1) selon une des revendications 1 à 6,
**caractérisé en ce que** le diamètre de noyau (dₛ) de la tige filetée (2) représente 55 % à 70 % du diamètre nominal de la vis (d_{g}), en particulier 60 % à 65 %.

8. Élément de vissage (1) selon une des revendications 1 à 7,
**caractérisé en ce que** le pas du filetage (12) représente 40 % à 70 % du diamètre nominal (d_{g}) et de préférence, pour les longueurs de filets supérieures ou égales à 4 fois le diamètre nominal (d_{g}), 40 % à 45 % ou 60 % à 65 % du diamètre nominal (d_{g}) et en particulier, pour les longueurs de filets inférieures à 4 fois le diamètre nominal (d_{g}), 40 % à 50 % du diamètre nominal (d_{g}).

9. Élément de vissage (1) selon une des revendications 1 à 8,
**caractérisé en ce que** le cercle d'enveloppe (14) de la section polygonale (4b) possède un diamètre (dₕ) qui est supérieur ou égal à un diamètre de noyau maximal (dₛ) de la tige filetée (2) de préférence de section transversale circulaire.

10. Élément de vissage (1) selon une des revendications 1 à 9,
**caractérisé en ce que** le diamètre de cercle d'enveloppe (dₕ) de la section polygonale (4b) de la tige filetée (4) est constant sur sa longueur axiale.

11. Élément de vissage (1) selon une des revendications 1 à 10,
**caractérisé en ce que** la section polygonale (4b) possède un diamètre de cercle d'enveloppe (dₕ₁), à la transition vers la seconde section de pointe (4c), qui est inférieur au diamètre de cercle d'enveloppe (dₕ₂) dans l'extrémité tournée vers la tige filetée (2) de la section polygonale (4b).

12. Élément de vissage (1) selon une des revendications 1 à 11,
**caractérisé en ce que** le diamètre de noyau (dₖ) de la seconde section de pointe cylindrique (4c), au niveau de sa surface de base, à la transition vers la section polygonale (4b), est inférieur au diamètre de noyau (dₛ) en particulier maximal de la tige filetée (2).

13. Élément de vissage (1) selon une des revendications 1 à 12,
**caractérisé en ce que** le filetage (12), au niveau de la section polygonale (4b) et dans le reste de la section de tige (2), possède le diamètre nominal (d_{g}) qui est supérieur au diamètre de cercle d'enveloppe maximal (dₕ) au niveau de la section polygonale (4b).

14. Élément de vissage (1) selon une des revendications 1 à 13,
**caractérisé en ce que** le diamètre extérieur de filet sur la pointe de vis (4), en partant de l'extrémité de l'élément de vissage, augmente en partant de de 0 jusqu'au diamètre nominal (d_{g}) sur la section polygonale (4b).

15. Élément de vissage (1) selon une des revendications 1 à 14,
**caractérisé en ce que** la section transversale polygonale de la section polygonale (4b) représente au moins trois, de préférence quatre points d'angle (15), qui se trouvent sur le cercle d'enveloppe (14) de la section polygonale (4b).

16. Élément de vissage (1) selon la revendication 15,
**caractérisé en ce que** les quatre points d'angle (15) se coupent sur deux droites (g₁,gz) se coupant orthogonalement dans l'axe longitudinal médian (X-X) de la section polygonale et présentent respectivement la même distance (b) par rapport à l'axe longitudinal (X-X).

17. Élément de vissage (1) selon la revendication 15 ou 16,
**caractérisé en ce que** les quatre points d'angle (15) de la section transversale polygonale de la section polygonale (4b) sont respectivement constitués dans le sens longitudinal les uns derrière les autres sur des droites s'étendant parallèlement à l'axe longitudinal médian (X-X), de sorte que des arêtes de noyau rectilignes (18) sont constituées.

18. Élément de vissage (1) selon la revendication 16 ou 17,
**caractérisé en ce que** les points d'angle (15) de la section transversale polygonale sont connectés par des faces de noyau (22) qui présentent une conformation concave telle qu'est constituée une section transversale polygonale qui est réalisée respectivement de manière symétrique au rabattement par rapport aux droites orthogonales (g₁,g₂) s'étendant à travers les points d'angle (15).

19. Élément de vissage (1) selon la revendication 16 ou 17,
**caractérisé en ce que** les faces de noyau (22) qui connectent les points d'angle (15) de la section transversale polygonale sont réalisées asymétriquement par rapport aux droites orthogonales (gi,g₂) s'étendant à travers les points d'angle (15) de manière à ce que, dans le sens de vissage (D) ou dans le sens de dévissage (D) d'un élément de vissage selon l'invention (1), un effet de coupe ou de fraisage accru soit atteint.

20. Élément de vissage (1) selon une des revendications 1 à 19,
**caractérisé en ce que** le filet (12) présente une arête extérieure de filet qui, vue dans le sens axial de l'axe longitudinal médian (X-X), s'étend en forme de spirale et, au niveau de la tige filetée (2), avec un rayon constant et, au-delà de la zone de la pointe de vis (4), en forme de spirale avec un rayon diminuant en continu.
